# FASCICULE DE BREVET EUROPEEN

(11) **EP 1 136 713 B1**
(45) Date de publication et mention de la délivrance du brevet: **19.01.2005**
(21) Numéro de dépôt: 01400461.8
(22) Date de dépôt: 22.02.2001
(51) Int. Cl.: F16C 35/06, F16C 19/54

(54) **Palier composite à double roulement à billes, procédé pour son montage, et outil pour la réalisation d'une paire de bagues dudit palier**
Zweireihiges Kugelverbundlager,sein Montageverfahren,und Werkzeug zur Herstellung eines Laufringpaares dieses Lagers
Composite double row ball bearing,its mounting procedure,and tool for realizing a pair of races of said bearing

(30) Priorité: 21.03.2000 FR 0003582
(43) Date de publication de la demande: 26.09.2001
(73) Titulaire: SAGEM SA, 75015 Paris (FR)
(72) Inventeur: Dardelet, Hervé, 95610 Eragny sur Oise (FR); Augot, Michel, 03410 Domerat (FR); Jenger, Marc, 03410 Domerat (FR)
(74) Mandataire: Gorrée, Jean-Michel

(56) Documents cités:
- WO-A-99/31397
- DE-C- 166 796
- US-A- 3 980 354
- US-A- 4 232 914
- US-A- 4 419 816
- US-A- 5 061 090

## Description

La présente invention concerne des perfectionnements apportés dans le domaine des paliers composites à double roulement à billes pour le support rotatif d'un arbre tournant d'un appareil de très haute précision, ces paliers à double roulement étant constitués par la juxtaposition de deux paliers à un seul roulement ayant deux bagues correspondantes respectives, intérieure ou extérieure, serrées axialement l'une contre l'autre avec une précontrainte prédéterminée.

Dans certains appareils de très haute précision (par exemple dans les centrales inertielles de navigation), il est nécessaire et indispensable qu'un arbre tournant soit monté et supporté dans un alésage avec une très grande précision de coaxialité et sans aucun jeu pour l'obtention de performances élevées. Une telle exigence nécessite que les billes du roulement restent en permanence au contact de leur chemin de roulement afin d'éviter les conséquences inhérentes à des "décollages" des billes (génération de chocs, usures, apparition de jeux) qui se traduisent en définitive par une perte de précision de l'appareil. Pour fixer les idées, on notera qu'en cas d'apparition d'un régime de fonctionnement vibratoire, c'est un effort qui peut atteindre par exemple 900 N qui peut s'exercer sur une bague de roulement possédant un diamètre de l'ordre de 35 mm et une épaisseur d'environ 3 mm.

Pour être en mesure de satisfaire les exigences de la pratique, on a donc recours à des paliers équipés, non pas d'un seul, mais de deux roulements à billes.

La solution la plus simple, qui consisterait à utiliser un palier unique équipé de deux roulements à billes juxtaposés ne peut toutefois pas être retenue : en effet, même en mettant en oeuvre des usinages de très grande précision, les deux roulements présentent des différences dimensionnelles (entraxes, diamètres des billes, diamètre des cuves,...) trop importantes pour que l'arbre tournant puisse être supporté dans l'alésage avec toute la précision et l'absence de jeu requises.

C'est ainsi qu'il est connu d'avoir recours à deux paliers à un seul roulement à billes qui sont appariés et qui sont ensuite mis en place sous précharge ou précontrainte axiale de leurs bagues correspondantes respectives, soit intérieure, soit extérieure, de sorte qu'ils se comportent alors comme un palier unique à deux roulements. Dans ce cas, à la différence du palier unique à double roulement, chaque palier peut être usiné avec toute la précision souhaitée ;les faces coopérantes respectives des deux bagues, intérieure ou extérieure, des deux paliers peuvent être rectifiées pour être en contact parfait l'une contre l'autre ; et la rigidité conférée par la précontrainte conduit finalement à un palier (ci-après dénommé "palier composite" car constitué par réunion de deux paliers monoroulement) propre à satisfaire la pratique pour ce qui est de la précision et de l'absence de jeu du montage de l'arbre tournant dans l'alésage de support.

Si les résultats obtenus avec ce type de palier composite satisfont la pratique, par contre les processus de montage d'un tel palier composite sont complexes et posent de nombreux problèmes.

Un processus classique de montage s'opère comme suit. Après appariement des pièces composantes (et notamment des deux bagues à accoler sous précontrainte), les deux paliers sont démontés, puis une première bague est mise en place en appui contre une portée axiale ; par exemple, s'agissant d'une bague intérieure, elle est montée sur l'arbre jusqu'à venue en butée contre un épaulement annulaire radial prévu sur l'arbre.

La seconde bague est ensuite prépositionnée à proximité immédiate de la première bague, mais sans être au contact de celle-ci ; dans l'exemple considéré de bagues intérieures, la seconde bague est montée à son tour sur l'arbre jusqu'à proximité immédiate de la première bague.

On amène alors un outil de poussée axiale contre la seconde bague et, à l'aide de cet outil, on déplace la seconde bague axialement vers la première bague jusqu'au contact physique avec celle-ci, puis on continue à exercer un effort sur la seconde bague jusqu'à ce que la charge ou précontrainte d'appui de la seconde bague sur la première atteigne une valeur prédéterminée. Toujours dans l'exemple considéré de bagues intérieures, l'outil de serrage peut consister en un écrou qui est vissé sur l'extrémité, filetée à cet effet, de l'arbre ; cet écrou, conformé par ailleurs de façon appropriée pour être en appui axial parfait contre la seconde bague, est propre, au cours de sa rotation, à déplacer la seconde bague pour d'abord l'amener contre la première bague, puis mettre les deux bagues sous précontrainte axiale à une valeur prédéterminable.

Les inconvénients de ce processus connu consistent en ce qu'il nécessite d'une part, un aménagement spécifique (filetage pour l'écrou de serrage) de l'élément de support des bagues sous précontrainte (l'alésage de support pour les bagues extérieures, l'arbre pour les bagues intérieures) et, d'autre part, le maintien à demeure des éléments nécessaires au montage (filetage et écrou) puisque la précontrainte des bagues n'est due qu'à la présence de l'outil de serrage (écrou vissé sur le filetage par exemple). Il en résulte un accroissement du poids de l'ensemble et, dans le cas des bagues intérieures, une modification inertielle de l'équipage mobile. Ces contraintes peuvent ne pas être acceptées, notamment lorsqu'il s'agit de diminuer dans toute la mesure du possible les dimensions de l'appareil ainsi équipé et d'en réduire le poids, ainsi que lorsqu'il s'agit d'accroître les performances de rapidité de réponse en réduisant au maximum les inerties des organes mobiles.

Pour tenter de remédier aux inconvénients précités, on a proposé de bloquer la seconde bague, en appui sous précontrainte prédéterminée contre la première bague, en collant (par un film de résine) la seconde bague sur son support. Dans ce cas, il est certes toujours nécessaire d'avoir recours à un outil de serrage pour accoler la seconde bague contre la première et exercer la précontrainte jusqu'à ce que le collage de la seconde bague sur son support soit mécaniquement effectif ; toutefois, l'outil de serrage peut ensuite être retiré, et il n'est plus présent dans l'appareil achevé prêt à fonctionner.

Toutefois ce processus présente, lui aussi, des inconvénients. Tout d'abord, si l'outil de serrage n'est certes pas maintenu dans l'appareil, certains aménagements nécessaires à son utilisation restent en place : ainsi, s'agissant d'un écrou propre à pousser la seconde bague, le filetage réalisé soit dans l'alésage (pour des bagues extérieures), soit sur l'extrémité de l'arbre (pour des bagues intérieures) demeure sur l'alésage ou sur l'arbre. La pratique peut ne pas accepter la présence de cet aménagement qui n'est pas nécessaire au fonctionnement de l'appareil.

Surtout, le film de colle de blocage de la seconde bague, qui est relativement mince (par exemple typiquement 1,5 µm), supporte mal les chocs thermiques (par exemple typiquement variation de 3 à 4°C par seconde dans une ambiance à 70°C environ). Le film de colle se fracture et les bagues ne sont plus maintenues sous précontrainte (voire se décollent de leur support), de sorte que l'arbre n'est plus supporté avec la précision requise et que l'appareil perd sa précision, voire n'est plus en état de fonctionner.

Pour tenter de contourner ces inconvénients, il a été proposé d'accroître l'épaisseur de la couche de colle qui devient alors apte à supporter sans détérioration des conditions thermiques sévères. Toutefois, en raison même de l'épaisseur de la couche de colle, la coaxialité rigoureuse des bagues et du support ne peut plus être assurée lors de la mise en place des bagues sur le support : il est nécessaire alors de conserver des zones axiales de positionnement (sans colle) propres à assurer le maintien axial mutuel des bagues et du support et des zones axiales de diamètre différent (avec colle) propres à solidariser les bagues au support.

Un tel processus d'assemblage nécessite des usinages et se révèle trop compliqué.

En outre, on notera que tous les processus qui viennent d'être exposés présentent l'inconvénient supplémentaire que la mise en précontrainte ou précharge des deux bagues s'effectue au cours même du montage de la seconde bague sur le support (alésage ou arbre), ce qui complique singulièrement le mode opératoire de mise sous précontrainte.

De ce point de vue, il s'avère donc souhaitable que les deux bagues puissent être réunies sous précontrainte axiale avant leur montage, puis être montées sur le support sous forme d'un bloc unitaire dont la mise en place peut alors être réalisée de la même manière que pour un traditionnel palier à double roulement.

Dans ce but, on pourrait certes envisager de solidariser les deux bagues à l'aide de pinces de sertissage. Toutefois, ce processus s'avère peu pratique, et en outre les bagues assemblées resteraient équipées des pinces de sertissage qui maintiennent la précontrainte : on retrouve là un des inconvénients du premier processus exposé plus haut.

Le document US-A-4 419 816 décrit un palier composite antifriction à double roulement à billes qui comprend deux bagues intérieures soudées axialement l'une à l'autre sous précontrainte, tandis qu'une bague extérieure unique, coiffant les deux rangées de billes, est perforée et munie d'un manchon radial pour le passage d'un faisceau laser de soudure des deux bagues intérieures. Un procédé ayant les caractéristiques du préambule de la revendication 1 est décrit dans le document US-A-5 061 090.

L'invention a donc pour but de remédier, dans toute la mesure du possible, aux inconvénients présentés par les diverses solutions comme dans l'état de la technique et de proposer une solution originale perfectionnée qui autorise un préassemblage des bagues sous précontrainte, qui écarte toute adaptation du support spécifiquement pour le montage des bagues, qui ne laisse subsister, dans l'appareil achevé, aucun organe additionnel spécifique au montage et/ou au maintien de la précontrainte des bagues, et qui autorise une production en séries relativement importantes de bagues préassemblées sous précontrainte.

A cet effet, selon un premier de ses aspects, l'invention propose un procédé de montage d'un palier à double roulement à billes pour le support rotatif d'un arbre tournant d'un appareil de très haute précision, ce palier à double roulement étant constitué par la juxtaposition de deux paliers à un seul roulement ayant deux de leurs bagues respectives, intérieure ou extérieure, serrées axialement l'une contre l'autre, lequel procédé se caractérise, étant constitué conformément à l'invention, en ce qu'il comprend la succession des étapes énoncées dans la partie caractérisante de la revendication 1.

En pratique, la soudure est faite par tronçons successifs. En raison du passage du faisceau laser à travers lesdites lumières, le faisceau laser ne peut pas être déplacé de façon continue, ce qui fait alors que la soudure est réalisée par tronçons successifs discontinus.

De préférence, les bords des bagues respectives sont chanfreinés et la soudure est effectuée dans le fond de la gorge formée par deux chanfreins coopérants, de sorte qu'aucun élément de soudure ne fait saillie et que la face latérale périphérique des bagues assemblées demeure lisse : rien ne gêne leur montage sur le support (alésage ou arbre).

Avantageusement, les deux bagues étant soudées le long de leurs bords coopérants intérieurs et extérieurs, la soudure des bords coopérants intérieurs est effectuée en premier lieu et la soudure des bords coopérants extérieurs en second lieu.

Selon un second de ses aspects, l'invention propose un outil de support, de centrage coaxial et de mise en précharge de deux bagues de roulements à billes destinées à être soudées l'une à l'autre, pour la mise en oeuvre du procédé précité, lequel outil se caractérise par la combinaison des dispositions énoncées dans la partie caractérisante de la revendication 6.

Dans un premier mode de réalisation de l'outil propre à traiter deux bagues intérieures, l'outil possède les caractéristiques énoncées dans la revendication 7. Dans ce cas, il est avantageux de faire en sorte que les premiers moyens de butée soient prévus sur ou constitués par le bord périphérique de la paroi latérale dudit moyeu ; et que les seconds moyens de butée soient prévus sur un couvercle solidaire dudit mandrin, ledit couvercle étant ouvert centralement pour donner accès à l'intérieur du mandrin.

Dans un second mode de réalisation de l'outil, il est proposé un outil destiné à traiter deux bagues extérieures, lequel outil, étant agencé selon l'invention, se caractérise par les dispositions énoncées dans la revendication 9.

Avantageusement dans ce cas, les seconds moyens de butée sont solidaires du mandrin et sont constitués par un flanc saillant radialement vers l'extérieur à partir du bord supérieur de la paroi latérale dudit mandrin.

Avantageusement l'outil comporte des moyens de support rotatif du mandrin.

De préférence, dans l'un ou l'autre des outils précités, les lumières du mandrin soient inclinées vers le bas de l'intérieur vers l'extérieur de la paroi du mandrin afin de faciliter le positionnement du rayon laser de soudure approximativement dans l'axe de chaque lumière.

L'invention sera mieux comprise à la lecture de la description détaillée qui suit de certains modes de réalisation préférés donnés uniquement à titre d'exemples nullement limitatifs. Dans cette description, on se réfère aux dessins annexés sur lesquels :
- la figure 1 est une vue schématique partielle en coupe d'un ensemble constitué d'un arbre tournant supporté dans un alésage par l'intermédiaire d'un palier à double roulement agencé conformément à l'invention ;
- la figure 2 est une vue schématique partielle en coupe, à plus grande échelle, d'une pièce monobloc formée de deux bagues soudées l'une à l'autre conformément à l'invention pour équiper le palier de la figure 1 ;
- la figure 3 est une vue schématique partielle en coupe d'une variante de réalisation du montage de la figure 1 ; et
- les figures 4 et 5 sont des vues en coupe d'un outil agencé conformément à l'invention pour la réalisation de doubles bagues respectivement intérieure et extérieure.

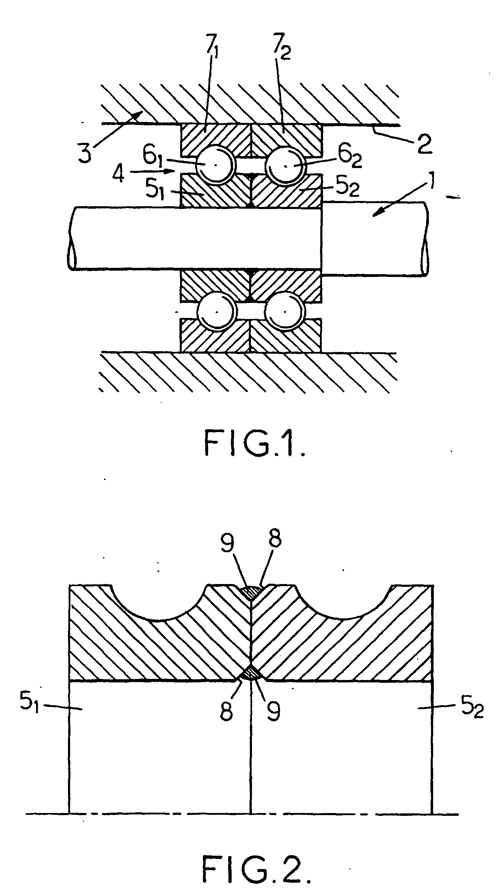

En se reportant tout d'abord à la figure 1, un arbre tournant 1, inclus dans un appareil de très haute précision (par exemple un gyromètre d'une centrale inertielle de navigation), est supporté à rotation dans un alésage 2 d'un corps de support 3 par l'intermédiaire d'un palier 4 à double roulement.

Le palier 4 à double roulement est constitué par la juxtaposition de deux paliers monoroulement : dans l'exemple représenté, il est constitué par la juxtaposition de deux bagues intérieures 5₁ et 5₂ (c'est-à-dire montées sur l'arbre 1) qui retiennent respectivement deux rangées annulaires de billes 6₁ et 6₂ en relation respectivement avec deux bagues extérieures 7₁ et 7₂ (c'est-à-dire montées dans l'alésage 3). Le détail de l'agencement des billes avec des cages de séparation et autres organes connus de l'homme du métier n'est pas représenté pour ne pas compliquer le dessin.

Pour que le palier 4 à double roulement et à double bague (ci-après dit "palier composite") présente les mêmes caractéristiques de rigidité mécanique qu'un palier monobloc à double roulement, deux des bagues, par exemple les deux bagues intérieures 5₁ et 5₂, sont maintenues accolées l'une contre l'autre sous une précontrainte ou précharge de valeur prédéterminée.

Pour éviter les inconvénients présentés par les montages antérieurs qui ont été précédemment exposés, on prévoit, conformément à l'invention, que les deux bagues intérieures 5₁ et 5₂ sont soudées l'une à l'autre par leurs faces coopérantes, la soudure étant effectuée tandis que les deux bagues sont maintenues l'une contre l'autre sous ladite précontrainte de valeur prédéterminée.

On conçoit dès lors les avantages considérables procurés par ce type de montage conforme à l'invention. En effet, une fois soudées, les deux bagues sont mécaniquement solidaires l'une de l'autre et forment un ensemble monobloc particulièrement rigide en raison de la précontrainte sous laquelle la solidarisation par soudure a été effectuée. De plus la résistance mécanique de la soudure est telle qu'elle ne risque pas d'être détruite sous l'action de la précontrainte.

Ainsi, il devient possible de solidariser les deux bagues l'une à l'autre dans les conditions requises avant leur montage sur l'arbre et, une fois seulement les bagues solidarisées, on monte l'ensemble monobloc sur l'arbre. Il en résulte une grande simplification du montage (un seul organe à monter au lieu de deux), et surtout tous les moyens extérieurs qui étaient destinés au maintien de la précontrainte (écrou-filetage, colle, ...) n'ont plus de raison d'être : l'arbre n'a plus à être usiné de façon spécifique, le poids de l'ensemble tournant est minimum et son inertie est réduite.

Autrement dit, grâce aux moyens prévus par l'invention, simultanément on simplifie la fabrication et le montage de l'ensemble et on améliore les caractéristiques de fonctionnement de cet ensemble.

De façon pratique, comme cela est visible à la figure 1, mais est encore mieux visible à la figure 2, au moins un des bords, extérieur et/ou intérieur, des faces coopérantes des deux bagues 5₁ et 5₂ est chanfreiné ; ces bords chanfreinés forment ensemble, une fois les deux bagues accolées, une gorge annulaire 8. Les chanfreins étant, de la façon la plus facile, un simple plat annulaire, la gorge 8 ainsi constituée présente une section transversale en V. La soudure 9 est alors déposée dans ladite gorge 8 de telle manière qu'aucune partie de soudure ne fasse saillie hors de la gorge 8 ; la gorge 8 doit alors présenter une géométrie (profondeur, ouverture) capable d'abriter un cordon de soudure propre à assurer l'assemblage mécanique requis, sans saillie extérieure pour ne pas gêner le montage ultérieur de la double bague.

On comprendra que la réalisation de la soudure est plus facile lorsque ce sont les bords extérieurs des faces coopérantes des bagues qui sont chanfreinés et que la gorge 8 s'ouvre sur l'extérieur.

Toutefois, à la fois pour renforcer l'assemblage mécanique des deux bagues en ne laissant pas cette fonction à un seul cordon de soudure et pour éviter certaines difficultés qui se présentent lors de la mise sous précontrainte des bagues pour une soudure exclusivement extérieure (risque de basculement des deux bagues sous l'action de l'effort de précontrainte), il s'avère avantageux qu'une soudure soit également effectuée le long des bords intérieurs des faces coopérantes des bagues et donc que ces bords intérieurs soient eux aussi chanfreinés. Dans ces conditions, pour écarter le risque de basculement précité lors de la mise sous précontrainte, il convient que la soudure intérieure soit réalisée en premier lieu, puis, seulement après celle-ci, que la soudure extérieure soit effectuée.

Aux figures 1 et 2, les deux bagues intérieures 5₁ et 5₂ sont illustrées solidarisées par deux soudures 9, intérieure et extérieure.

Les soudures sont avantageusement effectuées par laser, selon des techniques connues de l'homme du métier. Le cordon de soudure peut être réalisé de façon continue, en particulier pour la soudure extérieure, par exemple lorsqu'on peut faire tourner continûment l'ensemble des deux bagues précontraintes devant le rayon laser.

Toutefois, il n'est pas exclu que les soudures soient effectuées par tronçons successifs, pour former un cordon de soudure soit continu par tronçons aboutés, soit discontinu. Un tel processus de soudure par tronçons successifs est, en particulier, mis en oeuvre pour la soudure intérieure en raison de la difficulté d'accès à la gorge 8 intérieure, et un outil spécifique sera présenté plus loin pour faciliter ce travail.

Les explications qui précèdent ont été exposées plus précisément en regard du mode de réalisation illustré aux figures 1 et 2 dans lequel les deux bagues 5₁ et 5₂ sont des bagues intérieures, c'est-à-dire celles qui sont solidaires de l'arbre tournant 1.

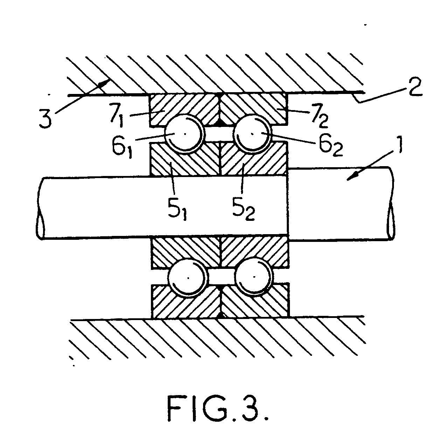

Toutefois, il est clair que les dispositions de l'invention s'appliquent également de la même façon et avec les mêmes avantages à des bagues extérieures, c'est-à-dire les bagues 7₁ et 7₂ qui sont solidaires de l'alésage 2 du corps de support 3, comme cela est illustré à la figure 3 en conservant les mêmes références numériques pour les organes identiques à ceux des figures 1 et 2.

Ainsi, pour le montage d'un palier à double roulement à billes pour le support rotatif d'un arbre tournant d'un appareil de très haute précision, ce palier à double roulement étant constitué par la juxtaposition de deux paliers à un seul roulement ayant deux de leurs bagues respectives, intérieure ou extérieure, serrées axialement l'une contre l'autre, on procède, conformément à l'invention, de la manière suivante :
- on apparie deux paliers à un seul roulement à billes ;en particulier alors, leurs bagues respectives, intérieure 5₁ et 5₂ ou extérieure 7₁ et 7₂, présentent des faces coopérantes ayant des géométries complémentaires ;
- après démontage des deux paliers, on positionne les deux bagues respectives précitées 5₁, 5₂ ou 7₁, 7₂ l'une contre l'autre et on les serre axialement l'une contre l'autre avec une précontrainte ou précharge prédéterminée ;
- on effectue ensuite une soudure le long d'au moins un des bords, intérieur ou extérieur, des faces coopérantes des deux bagues respectives maintenues sous ladite précontrainte, de telle sorte que la soudure ne fasse pas saillie radialement au-delà des faces annulaires périphériques desdites bagues, ladite soudure étant faite seulement le long des bords extérieurs ou bien le long des bords intérieurs d'abord, puis extérieur ensuite de leurs faces coopérantes, de préférence par mise en oeuvre d'un faisceau laser ;
- puis on monte la pièce monobloc formée des deux bagues soudées l'une à l'autre, sous précontrainte, en position sur son organe de support et on achève le montage complet du palier par excentration selon le principe des roulements à gorge profonde.

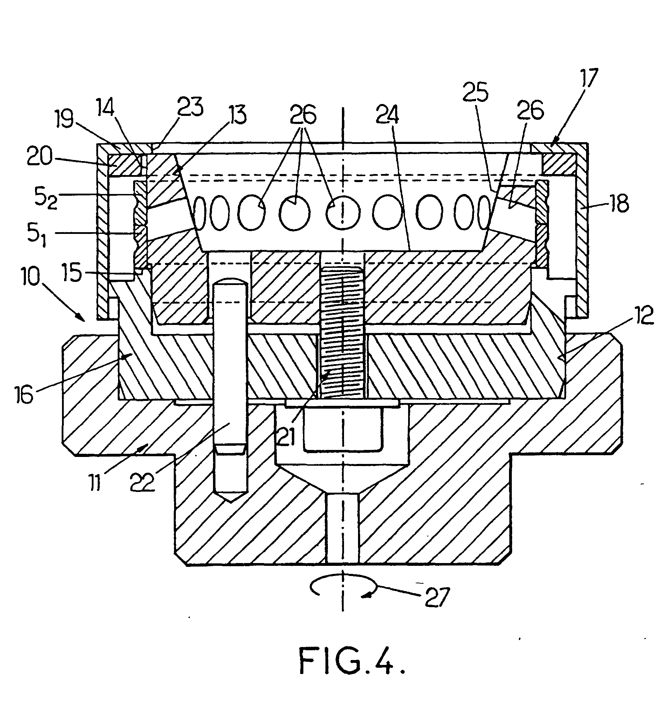

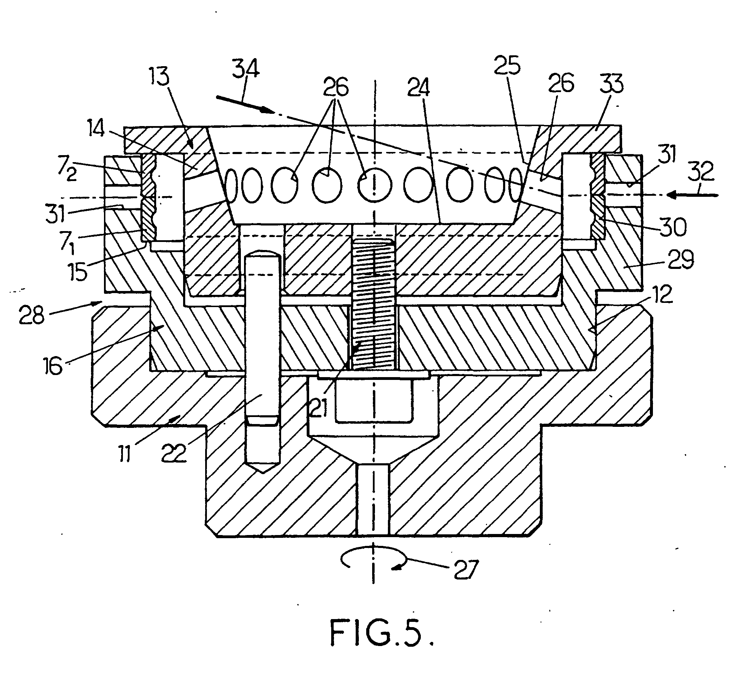

Pour la mise en oeuvre du processus de soudure des deux bagues maintenues sous précontrainte, on propose, conformément à l'invention, un outil spécifique dont deux modes de réalisation sont montrés en coupe aux figures 4 et 5, respectivement. Cet outil procure le support, le centrage coaxial et la mise en précharge de deux bagues de roulement à billes afin de pouvoir les souder l'une à l'autre, alors qu'elles sont maintenues sous précharge, le long des bords intérieur et/ou extérieur de leurs faces coopérantes.

A la figure 4, l'outil désigné dans son ensemble par la référence 10 est conformé pour le soudage de deux bagues intérieures 5₁, 5₂ maintenues sous précontrainte. L'outil 10 comporte une platine 11 présentant, supérieurement, une cuvette 12 propre à retenir coaxialement un mandrin 13 sensiblement tubulaire possédant une paroi latérale 14 à face externe cylindrique de révolution qui est apte à supporter et à centrer coaxialement deux bagues 5₁ et 5₂ disposées l'une à la suite de l'autre. De plus il est prévu des premiers moyens de butée axiale 15 solidaires dudit mandrin contre lesquels vient en appui une face libre de l'une des bagues 5₁.

Comme illustré à la figure 4, les premiers moyens de butée 15 peuvent être portés par un moyeu 16 qui repose dans la susdite cuvette 12 de la platine 11 et qui est conformé en bol dans lequel est emboîté le susdit mandrin 13 : c'est alors le bord supérieur annulaire de la paroi latérale dudit moyeu 16, qui présente un diamètre externe sensiblement supérieur au diamètre externe dudit mandrin, qui constitue les susdits premiers moyens de butée 15.

Au bord supérieur du mandrin 13 est solidarisée une pièce en forme de couvercle 17 dont la jupe latérale 18 encoure, à distance radiale, les deux bagues 5₁, 5₂ et est maintenue coaxialement par une excroissance du moyeu 16. Le plateau 19 du couvercle 17, ou bien comme représenté ici un anneau 20 solidaire intérieurement dudit plateau 19, constitue des seconds moyens de butée propres à venir porter contre la face libre de l'autre bague 5₂ lorsque le mandrin 13 est rapproché axialement du moyeu 16.

Pour assurer ce rapprochement, un organe de serrage tel qu'un boulon 21 disposé coaxialement a sa tête qui prend appui contre la face inférieure du moyeu 16 et sa tige, qui traverse le fond dudit moyeu, est vissée dans le fond du mandrin 13. Le serrage du boulon 21 permet de soumettre les deux bagues 5₁, 5₂ à une précontrainte prédéterminable.

De plus, un ou plusieurs pions 22 sont engagés dans des alésages alignés de l'embase 11, du moyeu 16 et du mandrin 13 pour les solidariser en rotation.

Pour que les bagues 5₁, 5₂ puissent être soudées l'une à l'autre le long des bords intérieurs de leurs faces coopérantes au moyen d'un rayon laser, le mandrin 13 et le couvercle 17 sont agencés comme suit.

Le couvercle 17 est ouvert en 23 dans sa région centrale.

Le mandrin 13 est évidé centralement en cuvette en 24 et sa paroi latérale 25 est percée d'une multiplicité de lumières traversantes 26 réparties périphériquement de façon régulière et débouchant en regard des faces aboutées des deux bagues 5₁, 5₂. Ces lumières 26 sont inclinées vers le bas radialement de l'intérieur vers l'extérieur.

Ainsi un rayon laser peut être dirigé, à travers l'ouverture 23 du couvercle et à travers successivement toutes les lumières 26 dans l'axe de celles-ci, pour réaliser des cordons discontinus de soudure sur les bords intérieurs des faces coopérantes des bagues 5₁, 5₂ tandis que ces bagues sont maintenues sous précontrainte axiale prédéterminée par serrage du moyeu et du mandrin.

Pour faciliter le travail qui vient d'être décrit, la source laser étant disposée de façon fixe, le mandrin 13 est tourné autour de son axe pour que toutes les lumières 26 soient présentées successivement au rayon laser. A cet effet, la platine 11 est agencée pour être supportée de façon rotative (moyens non montrés, schématisés par la flèche 27).

Quant à la réalisation de la soudure des bords extérieurs des faces coopérantes des bagues 5₁, 5₂, elle peut être réalisée en utilisant l'outil 10 en prévoyant des lumières (non montrées) dans la jupe 18 pour procurer des accès discontinus au rayon laser. Mais cette soudure peut également être réalisée, après extraction de la pièce monobloc formée par les deux bagues 5₁, 5₂ soudées intérieurement, en positionnant cette pièce monobloc sur un autre support de manière que la soudure extérieure puisse être effectuée soit de façon discontinue, soit de façon continue sur toute la périphérie.

A la figure 5 est illustré un autre mode de réalisation de l'outil, désigné dans son ensemble par la référence 28, qui est agencé pour le soudage de deux bagues extérieures 7₁ et 7₂. La conception générale de l'outil 28 reste identique, globalement, à celle de l'outil 10 de la figure 4, à ceci près qu'il est adapté pour que les bagues extérieures 7₁, 7₂ soient supportées et centrées coaxialement par leurs faces internes.

A cet effet, le moyeu 16 présente une paroi latérale 29 prolongée vers le haut, au-dessus de et radialement décalée vers l'extérieur par rapport à l'épaulement d'appui 15 précité. C'est contre la face 30, tournée vers l'intérieur, de cette paroi 29 que les bagues 7₁, 7₂ sont en appui en étant écartées radialement de la paroi latérale 14 du mandrin 13.

La paroi latérale 29 du moyeu 16 est percée d'une multiplicité de lumières 31 réparties sur le pourtour de ladite paroi 29. Ces lumières 31, sensiblement radiales, débouchent sensiblement en regard des bords extérieurs des faces coopérantes des deux bagues extérieures 7₁, 7₂ : il devient ainsi possible de réaliser la soudure (discontinue) extérieure des bagues 7₁, 7₂ en dirigeant un faisceau laser (flèche 32) successivement à travers les lumières 31.

Quant à la paroi latérale 14 du moyeu 16, elle est prolongée radialement vers l'extérieur, le long de son bord supérieur, par un flanc radial 33 annulaire qui s'étend au moins jusqu'au-dessus de l'emplacement des bagues 7₁, 7₂. Ainsi, en tournant le boulon 21, on rapproche le mandrin 13 du moyeu 16 et les deux bagues 7₁, 7₂ sont enserrées et mises sous charge entre le flasque annulaire 33 et l'épaulement 15.

La paroi latérale 14 du mandrin 13 conserve les lumières 26 précitées à travers lesquelles un faisceau laser peut être dirigé (flèche 34) pour atteindre et souder (de façon discontinue) les bords internes des faces coopérantes des deux bagues 7₁, 7₂.

## Revendications

1. Procédé de montage d'un palier à double roulement à billes pour le support rotatif d'un arbre tournant d'un appareil de très haute précision, ce palier à double roulement étant constitué par la juxtaposition de deux paliers à un seul roulement ayant deux de leurs bagues respectives, intérieure ou extérieure, serrées axialement l'une contre l'autre, **caractérisé en ce qu'**il comprend la succession des étapes suivantes :
- on apparie deux paliers à un seul roulement à billes, leurs bagues respectives, intérieure ou extérieure, présentant des faces coopérantes ayant des géométries complémentaires,
- après démontage des deux paliers, on supporte et on centre les deux bagues respectives dans un mandrin situé intérieurement aux deux bagues et pourvu d'une série de trous périphériques qui débouchent en regard des bords intérieurs des faces coopérantes des deux bagues et on positionne les deux bagues respectives précitées l'une contre l'autre et on les serre axialement l'une contre l'autre avec une précontrainte prédéterminée,
- on effectue une soudure des deux bagues respectives sous précontrainte en guidant un faisceau laser sur des sections discontinues des bords intérieurs des bagues successivement à travers les trous périphériques prévus dans le mandrin, de telle sorte que la soudure ne fasse pas saillie radialement au-delà des faces annulaires périphériques desdites bagues,
- puis on remonte la pièce monobloc, formée des deux bagues soudées sous précontrainte, en position sur son organe de support et on achève le montage complet du palier par excentration selon le principe des roulements à gorge profonde.

2. Procédé selon la revendication 1, **caractérisé en ce que** la soudure est réalisée par tronçons successifs.

3. Procédé selon la revendication 2, **caractérisé en ce que** la soudure est réalisée par tronçons successifs discontinus.

4. Procédé selon l'une quelconque des revendications 1 à 3, **caractérisé en ce que** les bords des bagues respectives sont chanfreinés et **en ce que** la soudure est effectuée dans le fond de la gorge formée par deux chanfreins coopérants.

5. Procédé selon l'une quelconque des revendications 1 à 4, **caractérisé en ce que** les deux bagues sont soudées le long de leurs bords coopérants intérieurs et extérieurs, et **en ce que** la soudure des bords coopérants intérieurs est effectuée en premier lieu et la soudure des bords coopérants extérieurs en second lieu.

6. Outil de support, de centrage coaxial et mise en précharge de deux bagues (5₁, 5₂ ; 7₁, 7₂) de roulements à billes destinées à être soudées l'une à l'autre, pour la mise en oeuvre du procédé selon l'une quelconque des revendications 1 à 5 en vue de l'obtention d'un palier composite,
**caractérisé en ce qu'**il comprend :
- un mandrin (13) sensiblement tubulaire propre à être entouré coaxialement par deux bagues (5₁, 5₂ ; 7₁, 7₂) disposées l'une à la suite de l'autre ;
- une platine (11) de support du mandrin (13), ladite platine (11) étant en forme de cuvette (12) propre à recevoir coaxialement un moyeu (16) ;
- ledit moyeu (16) ayant une paroi latérale (29) pourvue d'une multiplicité de lumières traversantes (31) réparties périphériquement et en regard desquelles se situent les bords à souder des deux bagues (5₁, 5₂ ; 7₁, 7₂), chaque lumière (31) constituant un passage pour qu'un faisceau laser le traversant puisse souder lesdites bords des deux bagues (5₁, 5₂ ; 7₁, 7₂) apparaissant en regard;
- des premiers moyens de butée axiale (15) solidaires dudit mandrin (13) contre lesquels vient en appui une face libre de l'une des deux bagues (5₁ ; 7₁) ; et
- des moyens de serrage (21) coaxiaux auxdits mandrin (13) et moyeu (15), comportant des seconds moyens de butée axiale (19, 20 ; 33) propres à venir en appui contre la face libre de l'autre des deux bagues (5₂ ; 7₂) de manière que sous l'action desdits moyens de serrage, les deux bagues (5₁, 5₂ ; 7₁, 7₂) soient serrées l'une contre l'autre jusqu'à l'obtention d'une valeur de précontrainte prédéterminée.

7. Outil (10) selon la revendication 6, **caractérisé en ce que** le mandrin (13) possède une paroi latérale (25) à face externe (14) cylindrique de révolution propre à supporter et à centrer axialement, par leurs faces internes, deux bagues intérieures (5₁, 5₂) disposées l'une à la suite de l'autre.

8. Outil selon la revendication 7, **caractérisé**
**en ce que** les premiers moyens de butée (15) sont prévus sur ou constitués par le bord périphérique de la paroi latérale dudit moyeu (16), et
**en ce que** les seconds moyens de butée (19 ; 20) sont prévus sur un couvercle (19) solidaire dudit mandrin (13), ledit couvercle (19) étant ouvert centralement (23) pour donner accès à l'intérieur du mandrin.

9. Outil (28) selon la revendication 6, **caractérisé en ce que** la paroi latérale (29) du moyeu (16) présente une face interne (30) cylindrique de révolution propre à supporter et centrer axialement, par leurs faces externes, deux bagues extérieures (7₁, 7₂) disposées l'une à la suite de l'autre.

10. Outil selon la revendication 9, **caractérisé en ce que** les seconds moyens de butée (33) sont solidaires du mandrin (13) et sont constitués par un flanc (34) saillant radialement vers l'extérieur à partir du bord supérieur de la paroi latérale (14) dudit mandrin.

11. Outil selon l'une quelconque des revendications 6 à 10, **caractérisé en ce qu'**il comporte des moyens de support rotatif du mandrin (flèche 27).

12. Outil selon l'une quelconque des revendications 6 à 11, **caractérisé en ce que** les lumières (26) du mandrin (13) sont inclinées radialement vers le bas de l'intérieur vers l'extérieur de la paroi (25) du mandrin afin de faciliter le positionnement du rayon laser de soudure approximativement dans l'axe de chaque lumière (26).

## Patentansprüche

1. Verfahren zum Montieren eines zweireihigen Kugellagers zur drehbaren Lagerung einer Drehwelle einer Vorrichtung sehr hoher Genauigkeit,
wobei das zweireihige Lager durch das Aneinanderreihen von zwei einreihigen Lagern aufgebaut ist, bei denen zwei ihrer jeweiligen inneren oder äußeren Hülsen axial gegeneinander gedrückt sind,
**dadurch gekennzeichnet, dass** es eine Abfolge der folgenden Schritte enthält:
zwei einreihige Kugellager werden gepaart, wobei ihre jeweiligen inneren oder äußeren Hülsen zusammenwirkende Flächen mit komplementären Geometrien aufweisen,
nach dem Auseinanderbauen der zwei Lager werden deren jeweilige Hülsen gehalten und zentriert auf einem Dorn, der innerhalb der zwei Ringe gelegen ist und mit einer Reihe von peripheren Bohrungen versehen ist, die gegenüber den Innenrändern der zusammenwirkenden Flächen der zwei Hülsen münden, und die zwei jeweiligen oben genannten Hülsen werden gegeneinander positioniert und axial mit einer vorbestimmten Vorspannung gegeneinander gedrückt,
ein Verschweißen der zwei jeweiligen Hülsen unter Vorspannung wird durch Leiten eines Laserbündels durch die in dem Dorn vorgesehenen peripheren Bohrungen nacheinander auf nichtkontinuierliche Abschnitte der Innenränder der Hülsen so durchgeführt, dass die Schweißung radial nicht über die ringförmigen Randflächen der Hülsen hinausragt,
dann wird das aus den zwei unter Vorspannung verschweißten Hülsen gebildete einstückige Teil auf seinem Stützelement in Position gebracht und die vollständige Montage des Lagers durch das Prinzip des Tiefrillenlagers erzielt.

2. Verfahren nach Anspruch 1, **dadurch gekennzeichnet, dass** die Schweißung an aufeinander folgenden Abschnitten gebildet wird.

3. Verfahren nach Anspruch 2, **dadurch gekennzeichnet, dass** die Schweißung an diskontinuierlich aufeinander folgenden Abschnitten gebildet wird.

4. Verfahren nach einem der Ansprüche 1 bis 3, **dadurch gekennzeichnet,**
**dass** die Ränder der jeweiligen Hülsen abgefast sind und
**dass** die Schweißung auf dem Grund der durch die zwei zusammenwirkenden Abfasungen gebildeten Rinne durchgeführt wird.

5. Verfahren nach einem der Ansprüche 1 bis 4, **dadurch gekennzeichnet,**
**dass** die zwei Hülsen entlang ihrer zusammenwirkenden inneren und äußeren Ränder verschweißt sind, und
**dass** die Schweißung der zusammenwirkenden Innenränder an erster Stelle ausgeführt wird und die Schweißung der zusammenwirkenden Außenränder an zweiter Stelle.

6. Stützwerkzeug, um zwei Hülsen (5₁, 5₂; 7₁, 7₂) von Kugellagern, die miteinander verschweißt werden sollen, koaxial zu zentrieren und unter Vorspannung zu bringen, zum Durchführen des Verfahrens nach einem der Ansprüche 1 bis 5 im Hinblick auf das Gewinnen eines zusammengesetzten Lagers,
**dadurch gekennzeichnet, dass** es enthält:
einen im wesentlichen rohrförmigen Dorn (13), der geeignet ist, koaxial von zwei Hülsen (5₁, 5₂; 7₁, 7₂) umgeben zu werden, die aufeinanderfolgend angeordnet sind,
eine Stützplatine (11) für den Dorn (13), wobei die Platine (11) die Form einer Wanne (12) aufweist, die geeignet ist, koaxial eine Nabe (16) aufzunehmen,
die Nabe (16), die eine Seitenwand (29) aufweist, die mit einer Mehrzahl von Durchgangsöffnungen (31) versehen ist, die auf dem Umfang verteilt sind und denen gegenüber die zu schweißenden Ränder der zwei Hülsen (5₁, 5₂; 7₁, 7₂) liegen, wobei jede Öffnung (31) einen Durchgang bildet, damit ein ihn durchquerendes Laserbündel die gegenüber erscheinenden Ränder der zwei Hülsen (5₁, 5₂; 7₁, 7₂) verschweißen kann,
ein erstes axiales Anschlagmittel (15), das mit dem Dorn (13) verbunden ist und gegen das eine freie Fläche eine der zwei Hülsen (5₁; 7₁) in Anschlag kommt, und
ein Mittel (21) zum koaxialen Klemmen des Dorns (13) und der Nabe (15) mit einem zweiten axialen Anschlagmittel (19, 20; 23), das geeignet ist, gegen die freie Fläche der anderen der zwei Hülsen (5₂; 7₂) in Anschlag zu kommen, so dass unter der Wirkung des Klemmmittels die zwei Hülsen (5₁, 5₂; 7₁, 7₂) gegeneinander gedrückt werden bis zum Erzielen eines vorbestimmten Wertes der Vorspannung.

7. Werkzeug nach Anspruch 6, **dadurch gekennzeichnet, dass** der Dorn (13) eine Seitenwand (25) mit einer drehzylindrischen Außenfläche (14) enthält, die geeignet ist, zwei Innenhülsen (5₁; 5₂), die aufeinanderfolgend angeordnet sind, über ihre Innenflächen zu halten und axial zu zentrieren.

8. Werkzeug nach Anspruch 7, **dadurch gekennzeichnet,**
**dass** das erste Anschlagmittel (15) vorgesehen ist an oder gebildet ist durch den Außenrand der Seitenwand der Nabe (16), und
**dass** das zweite Anschlagmittel (19; 20) an einer mit dem Dorn (13) verbundenen Abdeckung (19) vorgesehen ist, wobei die Abdeckung (19) in der Mitte (23) offen ist, um das Innere des Dorns zugänglich zu machen.

9. Werkzeug nach Anspruch 6, **dadurch gekennzeichnet, dass** die Seitenwand (29) der Nabe (16) eine drehzylindrische Innenfläche (30) aufweist, die geeignet ist, zwei Außenhülsen (7₁; 7₂), die aufeinanderfolgend angeordnet sind, über ihre Außenflächen zu halten und axial zu zentrieren.

10. Werkzeug nach Anspruch 9, **dadurch gekennzeichnet, dass** das zweite Anschlagmittel (33) mit dem Dorn (13) verbundenen ist und durch einen Flansch (34) gebildet ist, der radial von dem oberen Rand der Seitenwand (14) des Dorns aus nach außen vorspringt.

11. Werkzeug nach einem der Ansprüche 6 bis 10, **dadurch gekennzeichnet, dass** es ein Mittel zum drehbaren Lagern des Dorns enthält (Pfeil 27).

12. Werkzeug nach einem der Ansprüche 6 bis 11, **dadurch gekennzeichnet, dass** die Öffnungen (26) des Dorns (13) radial vom Inneren zum Äußeren der Wand (25) des Dorns hin nach unten geneigt sind, um die Positionierung des Laserstrahls zum Schweißen annähernd in der Achse jeder Öffnung (26) zu erleichtern.

## Claims

1. Process of assembly of a bearing with double ball bearings for the rotary support of a rotating shaft of a very high precision device, wherein this bearing with double ball bearings is constituted by the juxtaposition of two bearings with single ball bearings having two of their respective collars, interior or exterior, tightened axially against one another, **characterized in that** it comprises the succession of the following steps:
- one pairs up two bearings with single ball bearings, wherein their respective collars, interior or exterior, have co-operating faces having complementary geometric properties,
- after dismounting of the two bearings, one supports and centers the respective two collars in a chuck internally located in both collars and provided with several peripheral holes which open in front of internal edges of cooperating faces of both collars and one positions said two collars against one another and one tightens them axially against one another with a pre-determined pre-stress,
- one carries out soldering the two respective collars under pre-stress by guiding a laser beam on discontinuous sections of internal edges of collars successively through the peripheral holes provided on the chuck, in such a way that the soldered joint does not radially project beyond the peripheral annular faces of said collars,
- then one mounts the one-piece component, formed from the two soldered collars under pre-stress, in position on its support organ and one finishes the complete assembly of the bearing by excentration according to the principle of deep-groove ball bearings.

2. Process according to Claim 1, **characterized in that** the soldering is realized by successive sections.

3. Process according to Claim 2, **characterized in that** the soldering is realized by discontinuous successive sections.

4. Process according to one of the Claims 1 to 3, **characterized in that** the edges of the respective collars are beveled and **in that** the soldering is effected in the bottom of the groove formed by two co-operating beveled edges.

5. Process according to one of the Claims 1 to 4, **characterized in that** the two collars are soldered along their interior and exterior co-operating edges, and **in that** the soldering of the interior co-operating edges is carried out firstly and the soldering of the exterior co-operating edges is carried out secondly.

6. Tool for supporting, for coaxial centering and pre-stressing of two collars (5₁, 5₂; 7₁, 7₂) of ball bearings destined to be soldered to one another, in order to implement the process according to anyone of Claims 1 to 5 with a view to obtaining a composite bearing,
**characterized in that** it comprises:
- an substantially tubular chuck (13) suitable for being surrounded coaxially by two collars (5₁, 5₂; 7₁, 7₂) positioned one after the other;
- a support plate (11) for supporting the chuck (13), said plate (11) being in the form of a bowl (12) suitable for receiving coaxially a hub (16);
- said hub (16) having lateral wall (29) provided with a multiplicity of traversing lights (31) distributed peripherally and in front of which the edges to be soldered of the two collars (5₁, 5₂; 7₁, 7₂) are situated, each light (31) constituting a passage so that a laser beam crossing it can solder said edges of the two collars (5₁, 5₂; 7₁, 7₂) appearing in front thereof,
- first means of axial abutment (15), solid in respect of said chuck (13), against which a free face of one of the two collars (5₁, 7₁) comes in support,
- tightening means (21) coaxial to said chuck (13) and hub (16), comprising second means of axial abutment (19, 20; 33) suitable for coming to support against the free face of the other of the two collars (5₂, 7₂), in such a way that under the effect of said means of tightening, the two collars (5₁, 5₂; 7₁, 7₂) are tightened against one another until a pre-determined pre-stress value is obtained.

7. Tool (10) according to Claim 6, **characterized in that** the chuck (13) has a lateral wall (25) with a external face (14) cylindrical of revolution suitable for supporting and centering coaxially, by their internal faces, two interior collars (5₁, 5₂) positioned one after the other.

8. Tool (10) according to Claim 6, **characterized**
**in that** the first means of abutment (15) are provided on or constituted by the peripheral edge of the lateral wall of said hub (16), and
**in that** the second means of abutment (19 ; 20) are provided on a cover (19), solid in respect of said chuck (13), wherein the said cover (19) is opened centrally (23) in order to give access to the interior of the chuck.

9. Tool (28) according to Claim 6, **characterized in that** the hub (16) has a lateral wall (29) with an internal face (30) cylindrical of revolution suitable for supporting and centering coaxially, by their external faces, two exterior collars (7₁, 7₂) positioned one after the other.

10. Tool according to Claim 9, **characterized in that** the second means of abutment (33) are solid in respect of the chuck (13) and are constituted by a flank (34) projecting radially towards the exterior starting from the upper edge of the lateral wall (14) of said chuck.

11. Tool according to one of the Claims 6 to 10, **characterized in that** it comprises means of rotary support of the chuck (arrow 27).

12. Tool according to anyone of Claims 6 to 11, **characterized in that** the lights (26) of the chuck (13) are inclined radially towards the bottom from the interior towards the exterior of the wall (25) of the chuck, in order to facilitate the positioning of the soldering laser beam approximately in the axis of each light (26).
